# EUROPEAN PATENT SPECIFICATION

(11) **EP 1 557 001 B1**
(45) Date of publication and mention of the grant of the patent: **27.12.2006**
(21) Application number: 03751053.4
(22) Date of filing: 08.10.2003
(51) Int. Cl.: H04L 12/28, H04L 29/06

(54) **DATA ACCESSION PROCESS**
DATENZUGRIFFSPROZESS
PROCEDE D'ACQUISITION DE DONNEES

(30) Priority: 31.10.2002 GB 0225359
(43) Date of publication of application: 27.07.2005
(73) Proprietor: BRITISH TELECOMMUNICATIONS public limited company, London EC1A 7AG (GB)
(72) Inventor: CLARK, Jonathan, Andrew, Ipswich, Suffolk IP2 9PE (GB)
(74) Representative: Lidbetter, Timothy Guy Edwin
(86) International application number: PCT/GB2003/004414
(87) International publication number: WO 2004/040851

(56) References cited:
- WO-A-99/66690
- US-A1- 5 862 339
- BLANKERS P: "NETWORK SOLUTION FOR INTERNET ACCESS SERVICES" ON - ERICSSON REVIEW, ERICSSON. STOCKHOLM, SE, no. SPEC INT ISS, 1998, pages 4-13, XP000751709 ISSN: 0014-0171

## Description

This invention relates to the accession of latency dependant traffic like voice and video conferencing data from remote internet based servers and applications. In such traffic it is important to mimimise delay times as users are interacting in real time.

Currently, if a user having a high bit rate (2Mb/s) ADSL (asymmetric digital subscriber loop) connection attempts to send or receive real time data over the internet the results may not be satisfactory as the data packets can get delayed due to congestion and contention for capacity with other users over shared intermediate links. This delay is variable as it depends on what other traffic is present from moment to moment. It is possible to alter the underlying network to prioritise real time traffic - see for example International Patent Application WO99/12329 - but this requires changes to the core Internet Protocol (IP) network. Document WO99/66690, A ERICSSON TELEFON AB LM, on 23 December 1999 represents a user terminal and method for accessing data from an internet application over a distributed information network.

The concept of using multiple virtual connections and access connections to support improved throughput is already established and implemented in the form of Inverse Multiplexing for ATM (IMA) *(ATM-Forum AF-PHY-0086.0010):* for internet access the end user would get a single IP address and the access server would reassemble the data into one stream for routing across the internet. Note the access server is the gateway between the connection orientated ATM access network and the IP routed core. Therefore there would be no benefit if the bottleneck is in fact between the access server and the application being accessed across the internet.

Most access networks have the capability to allow an end user, if he so chooses, to gain access several times simultaneously, using the same or different internet service providers. Each time the user logs on he gets another IP address. To the core IP network these addresses all appear to be separate users. When it is heavily loaded, the core network divides its bandwidth up equally between the addresses contending for access, so a user who has logged on three times will get three times as much bandwidth as a user logged on only once. The mechanism to log on a plurality of times could be multiple asynchronous transfer mode (ATM) permanent or switched virtual connections (PVCs or SVCs), or the PPPoE (Point to Point Protocol over Ethernet). A web based server or peer application receiving requests for a particular stream from three separate IP address will expect the requests to have come from three different users and act accordingly. For example a video conference bridge will add three new users to the requested conference and relay the video / voice data received from each one to the other two. Note that the signals are duplicates of each other, so the additional bandwidth does not allow the user to obtain convey any additional information, unless additional measures are taken. (Such additional measures are the subject of the applicant's co-pending International Patent application filed, on the same date as the present application and claiming priority from United Kingdom patent application 0223536.5). Although each data stream will be the same, the variable delay means that different connections will be closest to real time at different times. If the initially optimum connection is subsequently swamped by a number of large packets, later packets in that stream may be delayed by more than their equivalents in another stream.

According to the invention, a user terminal for accessing data from a web based server or peer application over a distributed information network, is provided with means for generating a plurality of access requests for a plurality of duplicate series of packet data from one source over a plurality of routes, each series comprising one instance of each packet of an ordered set of packets, means for accepting the first instance to be received of each packet in the series, and means for assembling the accepted packets into a complete series.

Another aspect of the invention provides a method of accessing data from a internet application over a distributed information network, wherein a plurality of access requests are generated for a plurality of duplicate series of packet data from one source over a plurality of routes, each series comprising one instance of each packet of an ordered set of packets, and wherein the first instance to be received of each packet in the series is accepted, and the accepted packets are assembled into a complete series.

This invention relies on the user terminal and source server communicating with each other using real time data, to have a choice of routes to send the data. The sending application transmits the real time data over two or more routes simultaneously. The receiving application then has an improved chance of receiving each packet within an acceptable time, as the probability of the same packet being extensively delayed over all routes is relatively small.

In a preferred arrangement, the user terminal has means for determining the packet delay and variation over a first route and, if the packet delay and variation exceed acceptable limits in the access network, generating a request for access by means of one or more further routes. This allows the end user to choose to log on one or more times to one or more internet service providers. Each time he logs on, he is given another IP (Internet Protocol) address. The core IP network responds as if each address is a separate user.

With minor changes most access networks have the capability to allow an end user, if he so chooses, to gain access several times simultaneously, using the same or different internet service providers. Each time the user logs on he gets another IP address. To the core IP network these addresses all appear to be separate users.

If the user logs on several times to the same Internet Service Provider (ISP) he will be allocated addresses on the same end-routed domain so the data is very likely to take a similar route over the internet, reducing the likely benefits of diversity. However, if the user logs on to three different ISPs there is a far greater chance that the data will take different routes across the internet and so be subject to different delay profiles.

The mechanism to log on multiple times could be any existing system such as multiple Asynchronous Transfer Mode (ATM) Permanent or Switched Virtual Connections (PVCs or SVCs), or the PPPoE (Point to Point Protocol over Ethernet).

The application which is to send data to the end user will register two or more addresses to which to send duplicate data. The receiving application is arranged to use the first packet that is received and discard the duplications when they are subsequently received. Note that instances of subsequent packets from each route may be delivered in a different order from the order in which the instances of the first packet arrive. Thus one packet stream may deliver the first packet of the stream before another packet stream does so, but the second packet of that stream may be delayed to such an extent that it arrives after both the (duplicate) first packet and the second packet of another stream are delivered. For each packet, the first instance to arrive at the user terminal is assembled, so that an aggregate data stream is generated having lower delay, and lower delay variation, than any of the individual streams could have generated on its own.

It is possible that packet series delivery on one access route has fallen substantially behind others, so that no packets are being used from that route. In that case, it may be desirable to make an adjustment to the delivery process on that access route. This may be simply be closing the connection, thereby saving on bandwidth, and therefore cost if payment is made by time or number of packets delivered. Alternatively the access server may be requested to omit a specified number of packets (which have already been received over one of the other duplicate routes)

Packets may have been omitted or corrupted in one or more of the packet streams. It is therefore possible for the first instance of a packet to arrive on one route out of sequence, that is to say before the arrival (over another route) of the first (uncorrupted) instance of the packet that should precede it. If accuracy is important, the out of sequence packet may be buffered until the arrival of the first instance of the packet that should precede it, so that it can be assembled in its correct place in the output sequence. However, in some forms of real-time signalling, such as video conferencing, speed takes priority over accuracy. In such circumstances the out-of-sequence packet may be output immediately it arrives over a first route, all instances of the packet that should have preceded (including the first instance) it being disregarded when they eventually arrives over another route.

If additional bandwidth is required on one or more of the channels, the present invention may be used in combination with that of the applicant's co-pending International application, previously referred to, claiming priority from United Kingdom application 0223536.5. For example using six feeds (IP Addresses), the stream may be split into two to double the bandwidth, and then these two streams are then each duplicated three times to reduce delay according to the present invention)

Embodiments of the invention will now be described, by way of example, with reference to the drawings in which:
Figure 1 is a schematic illustration of a prior art Single ISP Connection Service
Figure 2 is a schematic illustration of the connection of three switched virtual connections (SVCs) to three Internet Protocol (IP) Addresses;
Figure 3 is a schematic illustration of a system operating according to the invention, with duplicated data streaming.
Figure 4 is a flow chart illustrating the method of operation of one embodiment of the invention.
Figure 5 is a flow chart showing one method of assembly of the incoming bit streams
Figure 6 is a flow chart showing an alternative method of assembly of the incoming bit streams

In all these figures, data is shown in one direction only. It will be appreciated that for applications like video conferencing there would normally be similar streams in the reverse direction.

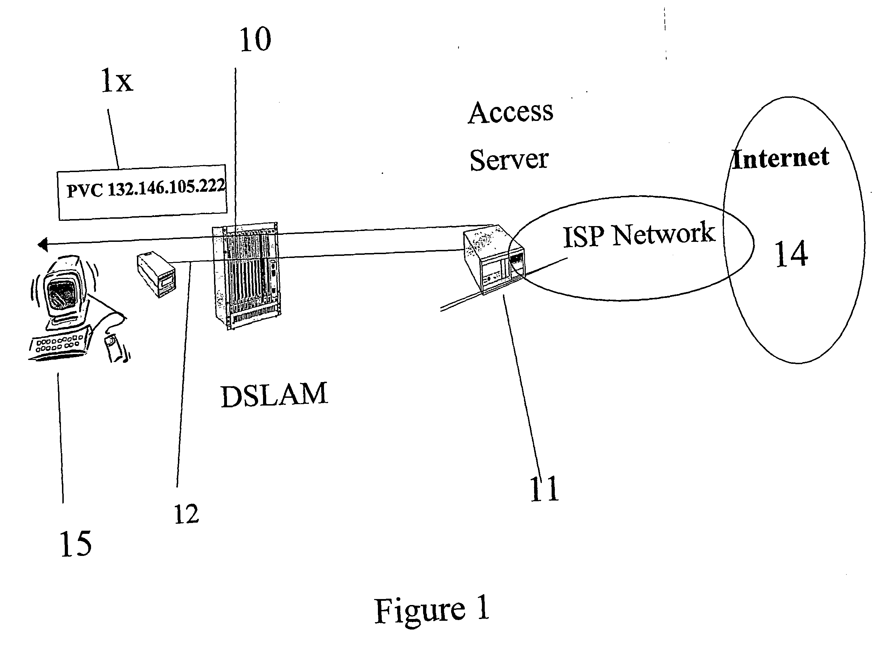

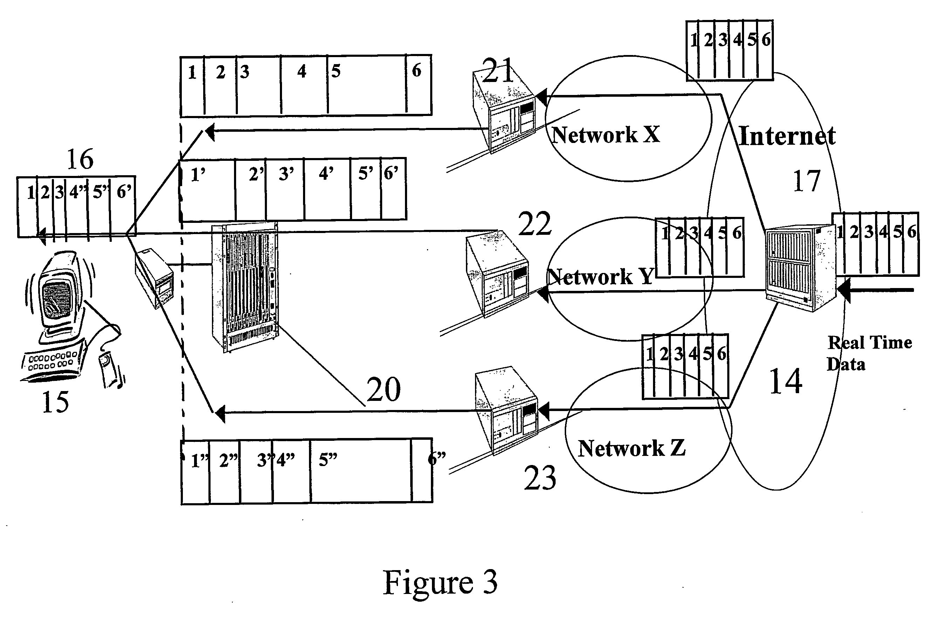

As shown in the conventional system of Figure 1, a single permanent virtual circuit (PVC) 10 is set up between the user terminal 1 of an ADSL user, and the access server 11. The access server 11 terminates the PVC 10 and the Point to Point Protocol (PPP) (12) signalling encapsulated onto the PVC. It also gives the end user terminal 15 an IP address 1X to enable it to connect to the internet (shown genaerlly at 14), and send data to any other internet application, for example a video conferencing application 17 (Figure 3).

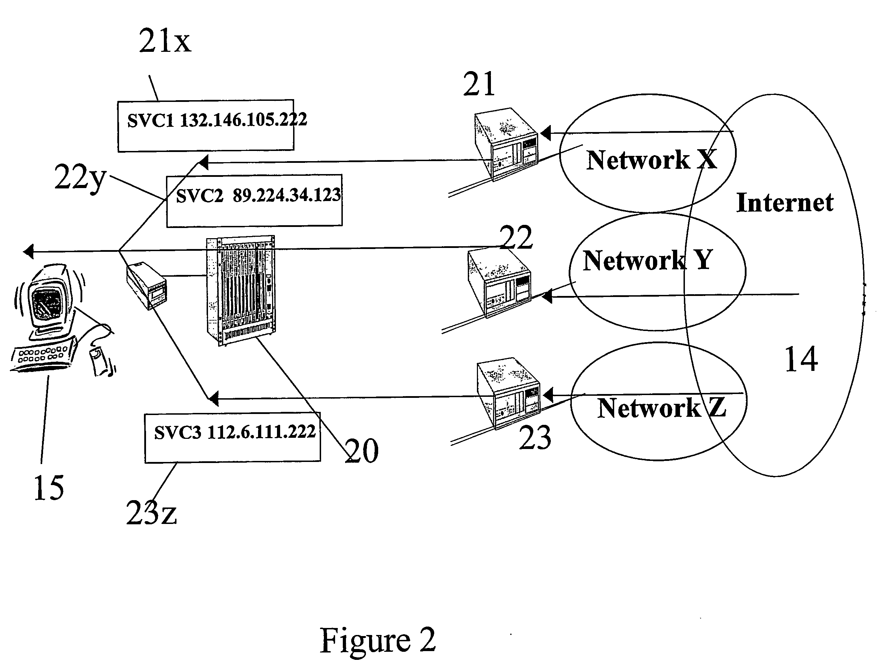

With a switched virtual circuit (SVC) ADSL multiplexer (DSLAM) 20 the end user terminal 15 can connect simultaneously to multiple access servers 21, 22, 23. Figure 2 shows the user logged on to three different internet service providers. Again using PPP the user is given a unique routable IP address 21 X, 22Y, 23Z for each connection. The increased number of connections marginally increases the contention level (the number of individual IP addresses attempting to access data), which in turn may affect the data rate on each channel at busy times.

For real time data, the time the data takes to traverse the network, known as the "latency" or "delay" of the network, is very important.. The latency of satellite systems is significantly worse than other systems because of the extra distance the data has to travel. (The round-trip distance to a geostationary satellite is approximately 0.25 seconds.) If the data were to be split and different parts of it sent over different routes, the process of storing the retrieved data until it had all been received would result in the latency of the transmission being dictated by that of the poorest service provider.

The system shown in Figure 3 avoids this problem by requesting the same data several times. This may appear to be an inefficient use of resources, in that data is duplicated. However, the invention merely uses some of the capacity available to the user minimise delay rather than to optimise some other characteristic such as picture quality.

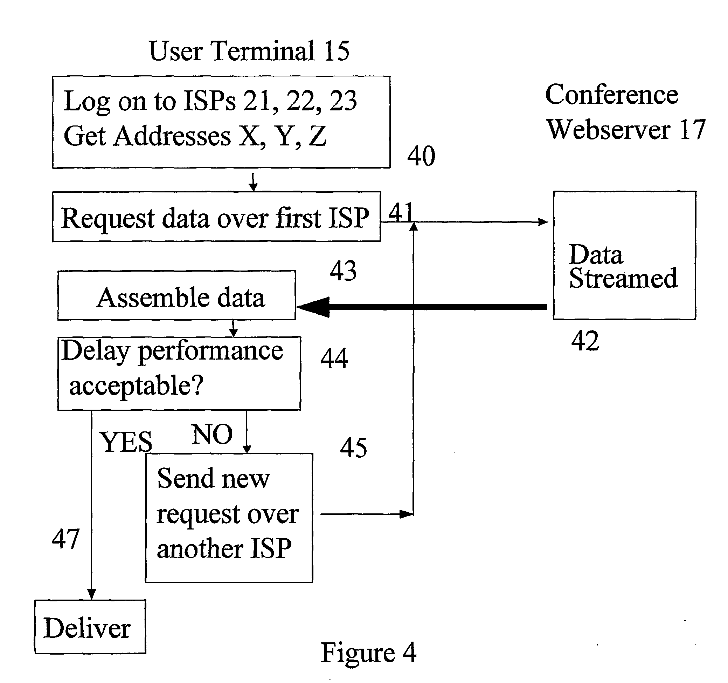

The internet application sending the data, for example a video conferencing application 17, sends the data out on three different paths 21, 22, 23. The latencies of networks vary dynamically due to variable traffic loading. Consequently the sequenced data frames may be received at different delays and it will not always be any given path 21, 22, 23 that is quickest. As will now be described with reference to Figure 4, the receiving application 15 processes the sequenced data frame (packet) that is received first and ignores the same data frame when subsequently received via another route. Figure 3 also shows illustrative data streams operated according to the invention.

As shown in Figure 4, the user terminal 15 first logs on to one or more ISPs 21, 22, 23 and gets a user address X, Y, Z for each, (step 40). It then requests access to the internet application 17 over one of the ISP networks 21 (step 41). The requested data is returned from the internet application 17 to the user terminal 15, and the packets are reassembled into a data stream 16 (step 43). The user terminal 15 then determines whether the rate at which the data is arriving is acceptable (step 44). If it is acceptable it is delivered to the user by way of a display or other human interface (step 47). If the rate is not acceptable, a request is made top the same internet application 17, using a different ISP 22 (step 45). (Logging on to the second ISP may take place at this point, or at the same time as the first ISP as shown in Figure 4). The same data is therefore now sent to the user terminal 15 from the internet application 17 by two different routes 21, 22. This cycle is continued until an acceptable rate is achieved (or the user runs out of available ISPs to use).

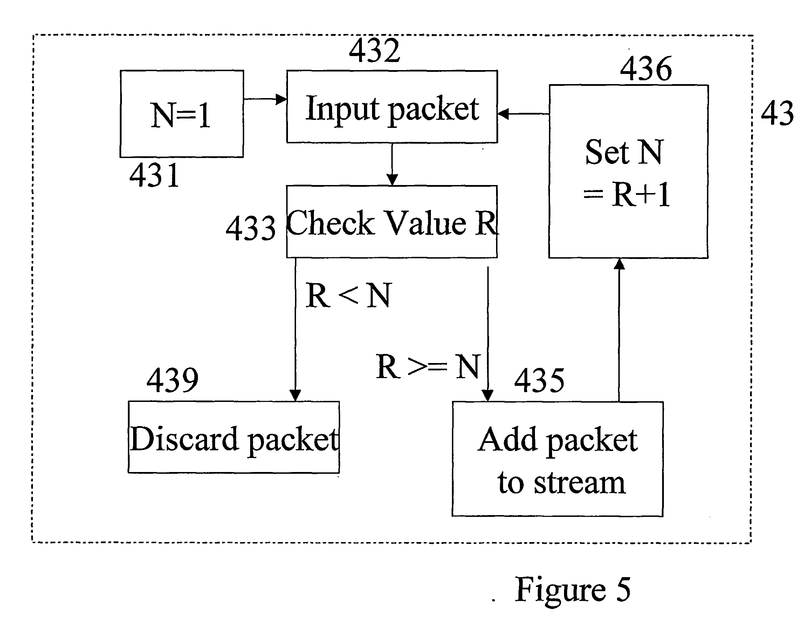

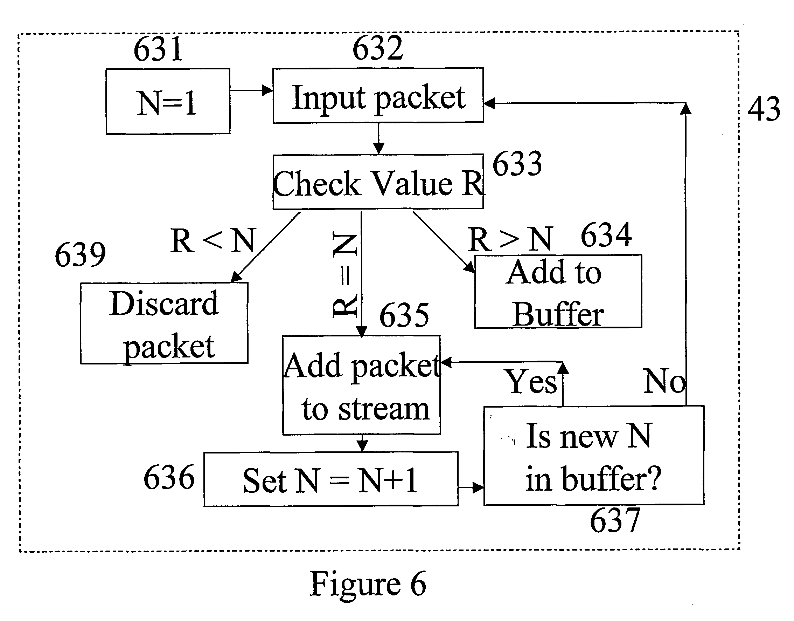

The assembly step 43 will be described in more detail, with reference to Figures 5 and 6. Some of the steps in Figures 5 and 6 are similar: where this is the case they are referenced with the same two final digits.

Each packet of a stream has a position value R, which identifies where it should come in the stream. In the present invention, a plurality of identical streams are being delivered and there should therefore be a plurality of instances of packets having each value R. The user terminal should identify and use the first instance of each value of R and discard the rest. The user terminal keeps a running total N of the position value R which the user terminal 15 is expecting - in other words the highest value of R so far received is N-1. As shown in Figures 5 and 6, this is initially set at a value of 1 (step 431/631).

When a packet is received, (step 432/632) the position value R is compared with the running total N (step 433/633). If R and N are equal, signifying that this is the first instance of that packet to arrive, the packet is added to the output stream (step 435/635) and the running total is incremented by 1 (step 436/636). If the position value is less than the running total, this signifies that a packet having the same position value (and therefore a duplicate of the present packet) has previously been received, and this packet can be discarded (step439/639).

In the example shown in Figure 3, the first packet is delayed by different amounts in the paths 21, 22, 23, and the user terminal 15 receives it first on path 21 (packet 1) and assembles it as the first element of an output stream 16. Packets 1', 1 ", arriving later on the other two paths, are redundant and disregarded. The second and third packets (packets 2,3) on path 21 also arrive before their duplicates (2', 3', 2", 3") on the other paths 22, 23. However, the fourth packet (4) has its journey through the path 21 delayed, and the first instance of this packet to arrive is instead the packet 4" on path 23. This is then added to the assembled output stream 16. Similarly, the fifth packet is seen first on the path 23 (packet 5") and is added to the output stream 16. Duplicate packets (4, 4', 5, 5') are again disregarded when they eventually arrive.

In the example of Figure 3, path 23 now also experiences a delay, and path 21 has not yet recovered from the earlier delay, so the first instance of packet 6 to arrive is that on the remaining path 22 (packet 6'), and this is duly added to the output stream, packets 6, 6" being disregarded when they arrive.

The end user 15 therefore gets the lowest delay possible from any of the three networks.

It should be understood that data streams in practice include thousands of individual packets, and the change in relative delay between one path and another is likely to occur on longer timescales than the one or two packets shown here.

On occasion packets are corrupted, lost altogether, or arrive in the wrong order, as a result of variations in switching delay even over the same virtual connection. This can result in a packet arriving which is intended for later in the sequence than the one that is expected. In other words, the position value R is greater than the running total N. Figures 5 and 6 illustrate two different ways of handling such packets in such a situation.

In Figure 5, should a packet arrive out of sequence, its position value R', when checked (step 433) will be found to be greater than the running total N. It is neverthelss added to the output stream 16, and the running total N incremented to the position value of the following packet (R'+1). This means that all instances of the packet that had been expected (which has position value R, (R<R'), will now be discarded (step 439). This arrangement ensures that corrupted packets do not delay the output stream, but loses some accuracy because of the omitted packets.

In the arrangement of Figure 6, in which steps similar to those of Figure 4 are given the same reference numerals incremented by 200, if the position value R' is found to be higher than the running total N the packet is added to a buffer (step 634) instead of the output stream 16. When a subsequent packet is added to the output stream 16 (step 635) and the running total incremented (step 636), a check is made to see if the next packet (having a position value R equal to the incremented running total) is already present in the buffer (step 637). If it is already buffered it is added to the output stream (step 635) without the need to wait for a second instance of the packet to be delivered. More than one buffered packet may be delivered in this way before the next packet arrives (step 632). This arrangement allows greater accuracy than that of Figure 4, without losing all the advantages of speed that the process of Figure 4 enjoys.

## Claims

1. A user terminal for accessing data from a internet application over a distributed information network, provided with means for generating a plurality of access requests for a plurality of duplicate series of packet data from one source over a plurality of routes, each series comprising one instance of each packet of an ordered set of packets, means for accepting the first instance to be received of each packet in the series, and means for assembling the accepted packets into a complete series.

2. A terminal according to claim 1, comprising means for determining the packet delay and variation over a first route and, if the packet delay and variation exceed acceptable limits in the access network, generating a request for access by means of one or more further routes.

3. A terminal according to claim 1 or 2, comprising means for identifying an access route on which packet series delivery has fallen substantially behind others, and means for requesting an adjustment to the delivery process on that access route.

4. A terminal according to any preceding claim, comprising means for detecting the arrival of the first instance of a packet out of sequence, and means for buffering the said out of sequence packet until the first instance of any packets that should have preceded it are received.

5. A terminal according to any of claims 1 to 3, comprising means for detecting the out of sequence arrival of the first instance of a packet, and means for disregarding the subsequent arrival of all instances of any packets that should have preceded the out of sequence packet.

6. A method of accessing data from a internet application over a distributed information network, wherein a plurality of access requests are generated for a plurality of duplicate series of packet data from one source over a plurality of routes, each series comprising one instance of each packet of an ordered set of packets, and wherein the first instance to be received of each packet in the series is accepted, and the accepted packets are assembled into a complete series.

7. A method of accessing data from a internet application over a distributed information network, wherein initially a first access request is made for a series of data packets to be received over a first route, the packet delay and variation of packets received over the first route is measured and, if the packet delay and variation exceed a predetermined limit, one or more requests for duplicate series of data packets are obtained according to the method of claim 6.

8. A method according to claim 6 or claim 7, wherein the duplicate series of packets are obtained using different access servers.

9. A method according to claim 6, 7 or 8, wherein if packet series delivery on one access route has fallen substantially behind others, an adjustment to the delivery process is made on that access route.

10. A method according to claim 6, 7, 8, or 9, wherein if the arrival of the first instance of a packet is out of sequence, the said out of sequence packet is buffered until the first instance of any packets that should have preceded it are received.

11. A method according to any of claims 6, 7, 8 or 9, wherein if the arrival of the first instance of a packet is out of sequence, all instances of any packets that arrive subsequently but should have preceded the out of sequence packet are disregarded.

## Patentansprüche

1. Anwenderendgerät für den Zugriff auf Daten von einer Internet-Anwendung über ein verteiltes Informationsnetz, das versehen ist mit Mitteln zum Erzeugen mehrerer Zugriffsanforderungen auf mehrere Duplikatreihen von Paketdaten von einer Quelle über mehrere Wege, wobei jede Reihe eine Instanz jedes Pakets einer geordneten Menge von Paketen enthält, Mitteln zum Akzeptieren der zu empfangenden ersten Instanz jedes Pakets in der Reihe und Mitteln zum Zusammenfügen der akzeptierten Pakete in eine vollständige Reihe.

2. Endgerät nach Anspruch 1, das Mittel umfasst, um die Paketverzögerung und die Variation über einen ersten Weg zu bestimmen und um, falls die Paketverzögerung und die Variation akzeptierbare Grenzen in dem Zugriffsnetz überschreiten, eine Anforderung für einen Zugriff auf einem oder mehreren weiteren Wegen zu erzeugen.

3. Endgerät nach Anspruch 1 oder 2, das Mittel, um einen Zugriffsweg zu identifizieren, auf dem die Paketreihenausgabe wesentlich hinter andere zurückgefallen ist, und Mittel, um eine Einstellung des Ausgabeprozesses auf diesem Zugriffsweg anzufordern, umfasst.

4. Endgerät nach einem vorhergehenden Anspruch, das Mittel, um die Ankunft der ersten Instanz eines außerplanmäßigen Pakets zu erfassen, und Mittel, um das außerplanmäßige Paket zu puffern, bis die erste Instanz irgendwelcher Pakete, die jenem vorhergegangen sein sollten, empfangen worden ist, umfasst.

5. Endgerät nach einem der Ansprüche 1 bis 3, das Mittel, um die Ankunft der ersten Instanz eines außerplanmäßigen Pakets zu erfassen, und Mittel, um die nachfolgende Ankunft aller Instanzen irgendwelcher Pakete, die dem außerplanmäßigen Paket vorhergegangen sein sollten, zu ignorieren, umfasst.

6. Verfahren zum Zugreifen auf Daten von einer Internet-Anwendung über ein verteiltes Informationsnetz, bei dem mehrere Zugriffsanforderungen für mehrere Duplikatreihen von Paketdaten von einer Quelle über mehrere Wege erzeugt werden, wobei jede Reihe eine Instanz jedes Pakets einer geordneten Menge von Paketen enthält, und bei dem die erste zu empfangende Instanz jedes Pakets in der Reihe akzeptiert wird und die akzeptierten Pakete in eine vollständige Reihe zusammengefügt werden.

7. Verfahren zum Zugreifen auf Daten von einer Internet-Anwendung über ein verteiltes Informationsnetz, bei dem anfangs eine erste Zugriffsanforderung für eine Reihe von zu empfangenden Datenpaketen über einen ersten Weg erfolgt, die Paketverzögerung und die Variation von Paketen, die über den ersten Weg empfangen werden, gemessen wird, und, falls die Paketverzögerung und die Variation eine vorgegebene Grenze überschreiten, eine oder mehrere Anforderungen für Duplikatreihen von Datenpaketen erhalten werden, gemäß dem Verfahren nach Anspruch 6.

8. Verfahren nach Anspruch 6 oder Anspruch 7, bei dem die Duplikatreihen von Paketen unter Verwendung verschiedener Zugriffsserver erhalten werden.

9. Verfahren nach Anspruch 6, 7 oder 8, bei dem dann, wenn die Paketreihenausgabe auf einem Zugriffsweg wesentlich hinter andere zurückgefallen ist, eine Einstellung des Ausgabeprozesses auf diesem Zugriffsweg erfolgt.

10. Verfahren nach Anspruch 6, 7, 8 oder 9, bei dem dann, wenn die Ankunft der ersten Instanz eines Pakets außerplanmäßig ist, dieses außerplanmäßige Paket solange gepuffert wird, bis die erste Instanz irgendwelcher Pakete, die ihm vorhergegangen sein sollten, empfangen worden ist.

11. Verfahren nach einem der Ansprüche 6, 7, 8 oder 9, bei dem dann, wenn die Ankunft der ersten Instanz eines Pakets außerplanmäßig ist, sämtliche Instanzen irgendwelcher Pakete, die anschließend ankommen, jedoch dem außerplanmäßigen Paket vorhergegangen sein sollten, ignoriert werden.

## Revendications

1. Terminal d'utilisateur pour accéder à des données depuis une application Internet par un réseau d'informations réparti, comportant des moyens pour engendrer une pluralité de requêtes d'accès pour une pluralité de séries dupliquées de données en paquet provenant d'une source par une pluralité de chemins, chaque série comprenant une instance de chaque paquet d'un ensemble ordonné de paquets, des moyens pour accepter la première instance à recevoir de chaque paquet de la série, et des moyens pour assembler les paquets acceptés en une série complète.

2. Terminal selon la revendication 1, comprenant des moyens pour déterminer le retard de paquet et la variation sur un premier chemin et, si le retard et la variation de paquet excèdent des limites acceptables dans le réseau d'accès, il est engendré une requête d'accès au moyen d'un ou plusieurs autres chemins.

3. Terminal selon l'une des revendications 1 et 2, comprenant des moyens d'identification d'un chemin d'accès sur lequel la livraison de séries de paquets est intervenue sensiblement derrière d'autres, et des moyens de requête d'un réglage du processus de livraison sur ce chemin d'accès.

4. Terminal selon l'une quelconque des revendications précédentes, comprenant des moyens de détection de l'arrivée de la première instance d'un paquet hors de séquence, et des moyens pour stocker temporairement le dit paquet hors de séquence jusqu'à ce que soit reçue la première instance de tout paquet qui aurait dû le précéder.

5. Terminal selon l'une quelconque des revendications 1 à 3, comprenant des moyens de détection de l'arrivée hors séquence de la première instance d'un paquet, et des moyens pour ignorer l'arrivée suivante de toutes instances de tous paquets qui auraient dû précéder le paquet hors de séquence.

6. Procédé d'accès à des données depuis une application Internet sur un réseau d'informations réparti, dans lequel une pluralité de requêtes d'accès sont engendrées pour une pluralité de séries dupliquées de données en paquet provenant d'une source par une pluralité de chemins, chaque série comprenant une instance de chaque paquet d'un ensemble ordonné de paquets, et dans lequel la première instance à recevoir de chaque paquet dans la série est acceptée, et les paquets acceptés sont assemblés en une série complète.

7. Procédé d'accès à des données depuis une application Internet par un réseau d'informations réparti, dans lequel, initialement, une première requête d'accès est faite pour une série de paquets de données à recevoir par un premier chemin, il est mesuré le retard et la variation de paquet de paquets reçus par le premier chemin et, si le retard et la variation de paquet excèdent une limite prédéterminée, une ou plusieurs requêtes pour des séries dupliquées de paquets de données sont obtenues selon le procédé de la revendication 6.

8. Procédé selon la revendication 7 ou 8, dans lequel les séries dupliquées de paquets sont obtenues en utilisant différents serveurs d'accès.

9. Procédé selon la revendication 6, 7 ou 8, dans lequel, si la livraison de séries de paquets par un chemin d'accès est intervenue sensiblement derrière d'autres, il est effectué un réglage du processus de livraison sur ce chemin d'accès.

10. Procédé selon la revendication 6, 7, 8, ou 9, dans lequel, si l'arrivée de la première instance d'un paquet est hors de séquence, le dit paquet hors de séquence est stocké temporairement jusqu'à ce que soit reçue la première instance de tout paquet qui aurait dû le précéder.

11. Procédé selon l'une quelconque des revendications 6, 7, 8 ou 9, dans lequel, si l'arrivée de la première instance d'un paquet est hors de séquence, on écarte toutes instances de tous paquets arrivant ensuite mais qui auraient dû précéder le paquet hors de séquence.
